# EUROPEAN PATENT SPECIFICATION

(11) **EP 3 149 253 B1**
(45) Date of publication and mention of the grant of the patent: **14.08.2019**
(21) Application number: 15799808.9
(22) Date of filing: 12.05.2015
(51) Int. Cl.: E03F 5/04, F24D 17/00, F28D 21/00, F28D 7/08, A47K 1/14, E03C 1/00, E03C 1/22, F28D 3/02, A47K 3/40

(54) **FLOOR DRAIN**
BODENABLAUF
SIPHON DE SOL

(30) Priority: 27.05.2014 SE 1450630
(43) Date of publication of application: 05.04.2017
(73) Proprietor: Recalor AB, 646 94 Björnlunda (SE)
(72) Inventor: TÖRNQUIST, Lars, 646 94 Björnlunda (SE); TÖRNQVIST, Hans, 619 34 Trosa (SE)
(74) Representative: Zacco Sweden AB
(86) International application number: PCT/SE2015/050528
(87) International publication number: WO 2015/183155

(56) References cited:
- EP-A1- 2 363 676
- WO-A1-2010/088784
- WO-A2-2012/171129
- AU-A1- 2007 202 401
- DE-A1- 3 717 720
- FR-A1- 2 262 950
- FR-A1- 2 868 796
- FR-A1- 2 986 020
- GB-A- 2 376 517
- US-A1- 2010 270 009
- US-A1- 2010 270 009

## Description

### TECHNICHAL FIELD

The present invention relates to a floor drain according to the preamble of claim 1.

### TECHNICAL BACKGROUND

Usually, hot water discharge from appliances where hot and cold water are to be mixed just before use, for example showers and bath tubs, is led directly into floor drains without a substantial drop of temperature in the water. The accumulated heat in the water is thus not exploited completely before it is led out into a floor drain and thereby a significant amount of unused energy is lost. In terms of efficient use of energy it is undesirable to discharge hot waste water without recovering the energy present in the waste water.

It is known to use floor drains comprising a heat exchanger for recovery of a part of the energy present in hot waste water. The recovered energy can be used to preheat cold water before entering a water heater or before being mixed with hot water in an appliance where hot and cold water are to be mixed just before use. Usually, cold water and hot water are mixed in a mixer valve to obtain a desired temperature. Most modern mixer valves are temperature regulated such that a constant output temperature is achieved despite fluctuations in the cold water supply or the hot water supply. Thereby preheating of the cold water result in that less hot water is needed to maintain a given temperature. Thus, the amount of energy consumed to supply hot water is reduced, which results in reduced energy costs and environmental benefits.

An example of a known floor drain provided with a heat exchanger for recovering heat present in used shower water is shown in document EP 2453194 A1. The heat exchanger comprises a tube received in a drain channel. The tube is provided with a feed for cold mains water and a discharge connected to a mixer tap for a shower. An upper cover with openings and a lower cover with openings are arranged recessed in the drain channel. Used shower water flows via the openings in the upper cover and in the lower cover and along the tube and heats the cold mains water before it is carried to the mixer tap. The drain channel is further provided with an outlet pipe connected to a sewer.

The floor drain disclosed in document EP 2453194 A1 has several drawbacks. One drawback is that it is impossible to inspect the connection between the heat exchanger tube's feed for cold mains water and the conduit for cold mains water and the connection between the tube's discharge and the mixer tap when the floor drain is installed in a floor of a building. Yet another drawback is that if these connections get damaged it results in water leakage in the floor in which the floor drain is installed. A further drawback is that it is difficult and time consuming to install the floor drain in a floor because it is needed to make room for the connections in the floor, for example by removal of a section of the floor.

The floor drain disclosed in document EP 2453194 A1 is cleaned by taking the upper cover and the lower cover out of the drain channel and washing and/or brushing the heat exchanger then left clear. It is thus difficult to clean the whole heat exchanger and it is not possible to clean all parts comprised in the floor drain, for example not the outlet pipe under the heat exchanger. Due to the fact that fouling agents, for example lime, from the waste water are easily gathered on the heat exchanger and that it is difficult to clean the whole heat exchanger, the thermal efficiency of the heat exchanger is easily deteriorated. Because hair and other impurities from the waste water tend to accumulate in the floor drain and because it is not possible to clean all parts comprised in the floor drain the risk of clogging of the floor drain is high.

The documents DE 37 17 720 A1, GB 2 376 517 A, WO 2010/088784 A1, US 2010/270009 A1, FR 2 986 020 A1, FR 2 868 796 A1 and WO 2012/171129 A2 relate to floor drains comprising a heat exchanger element. The document FR 2 262 950 A1 relates to a sink pipe plug having the provision of acting also as an overflow. The document AU 2007 202 401 A1 discloses a shower-floor drain. The document EP 2 363 676 A1 relates to a heat exchanger. The document DE 37 17 720 A1 is considered to represent the closest prior art. The features mentioned in the preamble of claim 1 are disclosed in this document.

As a consequence, in light of the above drawbacks, there is a need of an improved floor drain which provides the possibility to inspect the above mentioned connections when the floor drain is installed in a floor of a building, which is easier and less time consuming to install in the floor, which reduces the risk of water leakage in the floor wherein the floor drain is installed, which reduces the risk of reduced thermal efficiency of the heat exchanger element and which reduces the risk of clogging.

### SUMMARY OF THE INVENTION

The subject of the present invention is to eliminate the drawbacks according to prior art.

This subject has been fulfilled with the floor drain according to the claims.

More specifically, the floor drain comprises a drain compartment having a bottom, at least one side and an open upper portion. The bottom and the at least one side together define a space to collect waste water. The bottom comprises an opening for a drain trap. The floor drain further comprises a heat exchanger element, receivable in the space of the drain compartment, for transferring heat present in the waste water to fresh water. The heat exchanger element is provided with a first connection and a second connection. The first connection and the second connection are arranged inside the space of the drain compartment. A first conduit is connected to the first connection and a second conduit is connected to the second connection.

Thereby it is easier and less time consuming to install the floor drain because it is not needed to make room for the first connection and the second connection in a floor of a building, for example by removal of a section of a floor. It is also possible to inspect the first connection and the second connection inside the space of the drain compartment. The risk of water leakage in the floor wherein the floor drain is installed is also reduced because if the first connection and/or the second connection get damage the water will leak inside the floor drain instead of in the floor of the building. Thus, the conduits connected to the first connection and the second connection should not have any connections hidden in the floor or in the walls of a building in order to eliminate the risk of water leakage in the floor and wall material.

In a further aspect of the invention the first conduit is arranged to comprise fresh water having a first temperature and the second conduit is arranged to comprise fresh water having a second temperature.

In another aspect of the invention the heat exchanger element is pivotably arranged between a first and a second position. Thereby it is possible to bring the heat exchanger element in a position wherein the whole heat exchanger element is not received within the drain compartment. This results in that it is easy to clean the whole heat exchanger element and also in that it is possible to access and clean the parts arranged under the heat exchanger. Due to that it is easy to clean the whole heat exchanger element the heat exchanger element can be thoroughly cleaned. Thereby the risk of reduced thermal efficiency of the heat exchanger element is reduced. Due to the fact that it is possible to clean the parts arranged under the heat exchanger the risk of clogging of the floor drain is reduced.

In another aspect of the invention the drain compartment comprises at least one straight side.

In a further aspect of the invention the heat exchanger element is pivotable about an axis, which axis is substantially parallel with the at least one straight side of the drain compartment.

In a further aspect of the invention the first conduit for fresh water having a first temperature and the second conduit for fresh water having a second temperature comprise a flexible material. Thereby it is easy to pivot the heat exchanger element between the first position and the second position.

In yet another aspect of the invention the floor drain further comprises a partition wall removably arranged within the space of the drain compartment and comprising at least one waste water outlet and a drain control unit having walls encircling the at least one waste water outlet. The walls are protruding upward from the partition wall and also protruding above the heat exchanger element when the heat exchanger element is arranged in the first position. In such way the emptying of waste water through the waste water outlet encircled by the drain control unit is delayed and in turn the heat exchanger element is submerged in the waste water for a longer time. Thus, increased exchange of energy between the waste water and the water inside the heat exchanger element is obtained.

In another aspect of the invention the floor drain further comprises a cover removably arranged upon the open upper portion of the drain compartment and provided with at least one first opening via which waste water is arranged to enter the space of the drain compartment. The cover makes it possible to give the floor drain a more aesthetic appearance.

In a further aspect of the invention the first opening for waste water in the cover is orientated in relation to the at least one waste water outlet in the partition wall such that flow of waste water in the space of the drain compartment is directed in a direction essentially opposite to the direction of the fresh water in the heat exchanger element. Thus, the heat exchanger is operated in counter flow and thereby the efficiency of the heat exchanger element is increased.

In yet another aspect of the invention the floor drain further comprises a waste water guiding element removably arranged within the space of the drain compartment and arranged to slope downwards towards the heat exchanger element, with an angle α in relation to the open upper portion of the drain compartment. The waste water guiding element is provided with at least one second opening via which waste water is arranged to enter the space of the drain compartment. The at least one second opening is arranged in a lowermost part of the waste water guiding element. The waste water guiding element makes it possible to direct the flow of waste water inside the drain compartment.

In another aspect of the invention the at least one second opening for waste water in the waste water guiding element is orientated in relation to the at least one waste water outlet in the partition wall such that flow of waste water in the space of the drain compartment is directed in a direction essentially opposite to the direction of the fresh water in the heat exchanger element. Thus, the heat exchanger is operated in counter flow and thereby, as mentioned above, the efficiency of the heat exchanger element is increased.

In a further aspect of the invention the angle α is preferably between about 0,01° and about 15°. Thereby the waste water flows along the waste water guiding element at a suitable rate.

In yet another aspect of the invention a plurality of second openings are arranged in a row. The row of second openings prevents hair and other impurities from entering the drain compartment. Thereby the risk that hair and other impurities accumulate in the floor drain is reduced and in turn the risk of clogging of the floor drain is reduced.

In another aspect of the invention the floor drain further comprises a drain trap arranged in connection to the at least one waste water outlet. Thereby the risk of obnoxious smells from the floor drain is reduced.

In a further aspect of the invention the fresh water having a first temperature is tap water. Tap water is advantageously used for bathing or washing.

In yet another aspect of the invention the second conduit for fresh water having a second temperature is connected to a water valve or a mixer valve and/or a water heater. Thus, the recovered heat is reused. Thereby the amount of energy consumed to supply hot water is reduced resulting in reduced energy costs and environmental benefits.

Further embodiments and advantages of the present invention are evident from the following detailed description.

### BRIEF DESCRIPTION OF THE DRAWINGS

In the following the invention is described with reference to embodiments of the present invention and the accompanying drawings, in which:
- Fig. 1-4: show schematic views illustrating the effect obtained by using the floor drain according to the present invention,
- Fig. 5: shows a perspective view of the floor drain, wherein the floor drain is exploded, according to the present invention,
- Fig. 6: shows a perspective view of the floor drain, wherein the floor drain is assembled, according to the present invention,
- Fig. 7: shows a perspective view of the floor drain, wherein the heat exchanger element is in the first position, according to the present invention, and
- Fig. 8: shows a perspective view of the floor drain, wherein the heat exchanger element is in the second position, according to the present invention.

### DETAILED DESCRIPTION OF THE INVENTION

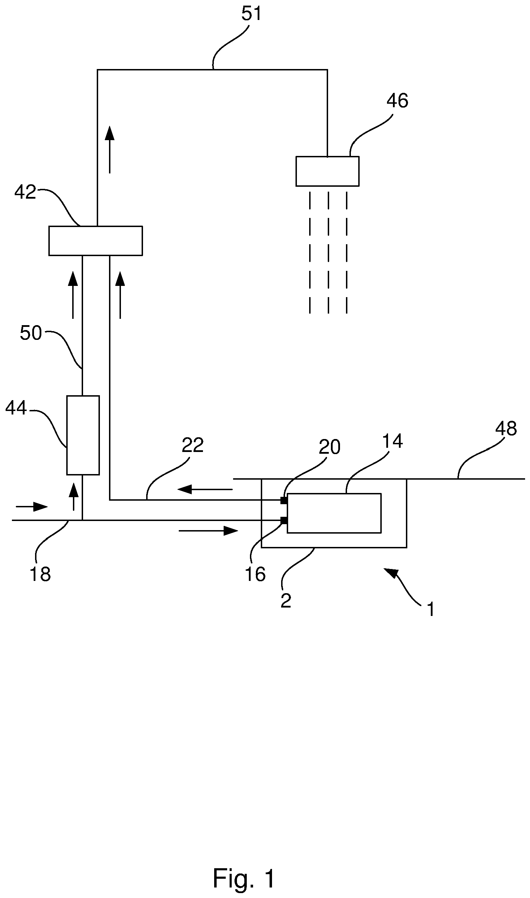

Fig. 1-4 show schematic views illustrating the effect obtained by using the floor drain 1 according to the present invention. In fig. 1-4, the dashed lines are water and the straight arrows show the direction of the water flow. A shower is shown in fig. 1-4. It is also possible to use the floor drain 1 together with a bath tub, a washing machine, a dish washer or any other appliance where hot and cold water are to be mixed just before use. The effect will first be described with reference to fig. 1.

A shower head 46 is arranged above the floor drain 1 which is arranged in a floor 48. The definition of a "floor drain" is a drain that is installed in a floor so that the top of the floor drain is substantially in the same level as the floor surface. The floor drain 1 comprises a heat exchanger element 14 arranged inside a drain compartment 2. The heat exchanger element 14 is connected with a first connection 16 to a first conduit 18 for fresh water having a first temperature t1 and with a second connection 20 to a second conduit 22 for fresh water having a second temperature t2. Thus, the first connection 16 and the second connection 20 are arranged inside the drain compartment 2 in order to prevent water leakage outside the drain compartment 2.

The second conduit 22 for fresh water having a second temperature t2 is further connected to the inlet of a mixer valve 42. The mixer valve 42 is further connected to a third conduit 50 for fresh water having a third temperature t3. The third conduit 50 for fresh water having a third temperature t3 is further connected to a water heater 44 which in turn is connected to the first conduit 18 for fresh water having a first temperature t1. The shower head 46 and the mixer valve 42 are connected to each other by a fourth conduit 51 for fresh water having a fourth temperature t4.

During showering, fresh water having a first temperature t1 is supplied by the first conduit 18 to the heat exchanger element 14 in the floor drain 1 and to the water heater 44. Further, fresh water having a second temperature t2 is supplied by the second conduit 22 and fresh water having a third temperature t3 is supplied by the third conduit 50 to the mixer valve 42. In the mixer valve 42, the fresh water having a second temperature t2 and the fresh water having a third temperature t3 is mixed to supply fresh water having a fourth temperature t4 to the fourth conduit 51 and the shower head 46.

At the beginning of showering, the first temperature t1 and the second temperature t2 is essentially the same. The first temperature t1 and the second temperature t2 can for example be 7 °C. The fresh water having a third temperature t3 has been heated by the water heater 44, thus the third temperature t3 is higher than the first temperature t1 and the second temperature t2. The third temperature t3 can for example be 60 °C. The water supplied by the shower head 46 leaves the floor 48 through the floor drain 1. If the fourth temperature t4 is higher than the first temperature t1, the floor drain's 1 heat exchanger element 14 recuperates a part of the heat energy present in the waste water. (Any changes of the temperature of the water that is supplied by the shower head 46 is disregarded.) The fourth temperature t4 can for example be 37 °C.

The recuperated energy heats the water inside the heat exchanger element 14. This results in that the second temperature t2 is increased (thus the second temperature t2 becomes higher than the first temperature t1) and in that the temperature of the waste water leaving the floor drain 1 is decreased. In this stage, the second temperature t2 can for example be 25 °C and the temperature of the waste water leaving the floor drain 1 can for example also be 25 °C.

In the mixer valve 42, the fresh water having a third temperature t3 now is mixed with the fresh water having a second temperature t2, which second temperature t2 (as mentioned above) has been raised. Therefore less fresh water having a third temperature t3 needs to be used for obtaining fresh water having a constant fourth temperature t4. Thereby energy for heating up water is saved.

Preferably, the mixer valve 42 is a thermostatic mixer valve. A thermostatic mixer valve controls the relative proportions of hot and cold water, supplied to an outlet of the thermostatic mixer valve, in accordance with user selection of the outlet water temperature and a thermal control system to compensate for changes in the temperature and/or pressure and/or flow rate of the water supplied to an inlet of the thermostatic mixer valve to maintain the desired constant outlet water temperature.

The mixer valve 42 can also be a mechanical mixer valve. A mechanical mixer valve cannot automatically compensate for changes in the temperature and/or pressure and/or flow rate of the water supplied to an inlet of the mechanical mixer valve. If the mixer valve 42 is a mechanical mixer valve, the user of the shower has to adjust the mixer valve 42 to compensate for changes in the temperature and/or pressure and/or flow rate of the water supplied to the inlet of the mechanical mixer valve to maintain a desired constant outlet water temperature.

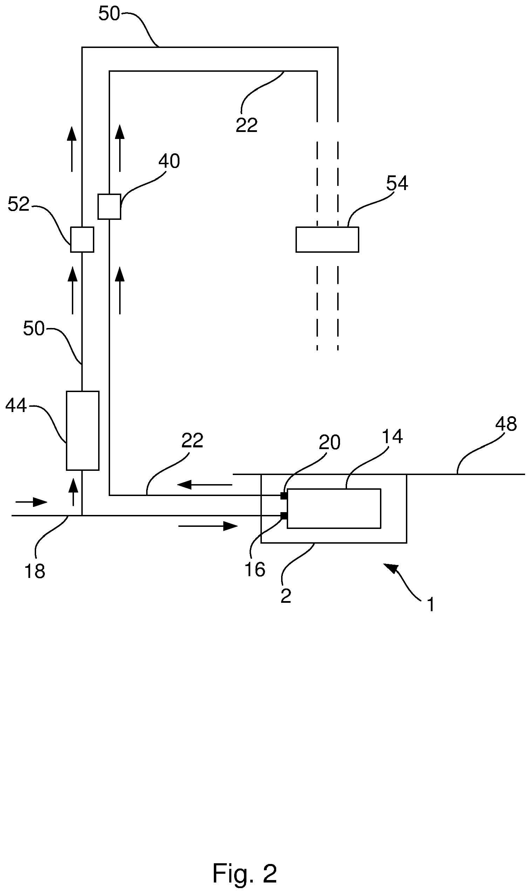

It is also possible to not use a mixer valve 42 at all. This is shown in fig. 2. Fig. 2 is exactly the same as fig. 1 except from that fig. 1 shows a mixer valve 42, a fourth conduit 51 and a shower head 46 and fig. 2 shows two separate water valves 40, 52 and a mixing element 54. One water valve 52 is connected to the third conduit 50 for fresh water having a third temperature t3 and the other water valve 40 is connected to the second conduit 22 for fresh water having a second temperature t2. It is possible, but not necessary, to use a mixing element 54, for example a funnel, to mix the water supplied by the second conduit 22 for fresh water having a second temperature t2 and the third conduit 50 for fresh water having a third temperature t3. In fig. 2 the water valves 40, 52 are connected after the water heater 44 and the heat exchanger element 14. It is also possible, in for example pressure less systems, to connect the water valves 40, 52 before the water heater 44 and the heat exchanger element 14 (this is not shown).

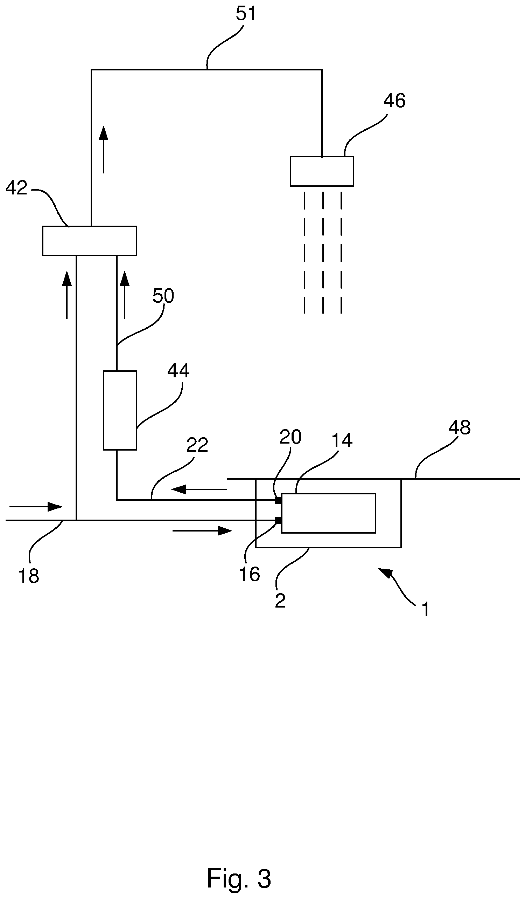

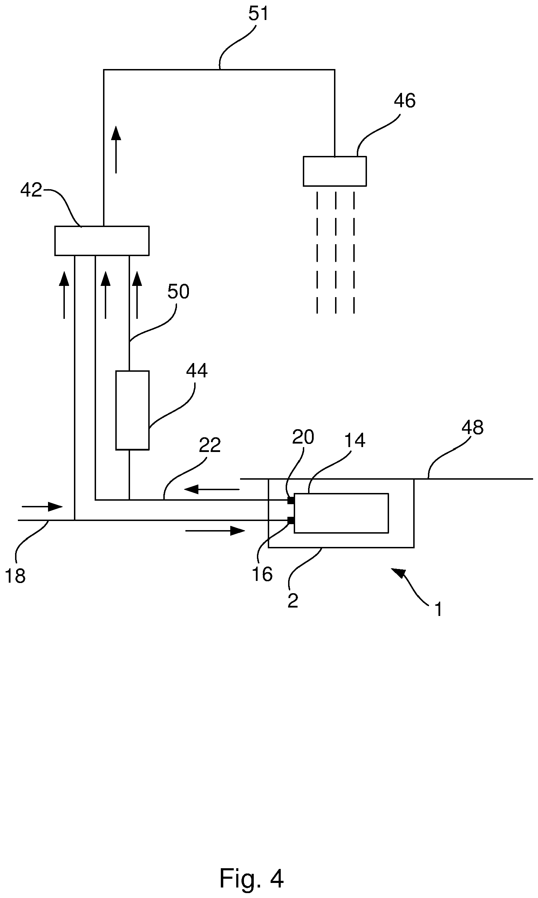

In fig. 1 the recuperated energy is used to preheat water supplied to the mixer valve 42 and in fig. 2 the recuperated energy is used to preheat water supplied to the inlet of the water valve 40. It is also possible to preheat water supplied to the water heater 44. This is shown in fig. 3. Fig. 1 and fig. 3 is exactly the same except from that the water heater 44 is connected to the first conduit 18 for fresh water having a first temperature t1 in fig. 1 and that the water heater 44 is connected to the second conduit 22 for fresh water having a second temperature t2 in fig. 3. Further, it is also possible to preheat water supplied to both the mixer valve 42 and the water heater 44. This is shown in fig. 4. Fig 4 is exactly the same as fig. 3 except from that both the mixer valve 42 and the water heater 44 is connected to the second conduit 22 for fresh water having a second temperature t2 in fig. 4 and that the mixer valve 42 is not connected to the second conduit 22 for fresh water having a second temperature t2 in fig. 3. It is also possible to preheat water supplied to both the water valve 40 and the water heater 44 (this is not shown). The preheated water is often used for showering or washing, therefore the fresh water having a first temperature t1 advantageously is tap water. The tap water can be potable water or process water.

Fig. 1-4 show, as mentioned above, that the first conduit 18 is connected to the heat exchanger element 14 with the first connection 16 and that the second conduit 22 is connected to the heat exchanger element 14 with the second connection 20. The first connection 16 and the second connection 20 are, as mentioned above, arranged inside the drain compartment 2. Thus, there are no connections connecting the heat exchanger element 14 to the first conduit 18 and to the second conduit 22 outside the drain compartment 2.

No hidden connections, such as coupling elements, are present between the first connection 16 and the water heater 44 in Fig. 1 and Fig. 2 and between the first connection 16 and the mixer valve 42 in Fig. 3 and Fig. 4. Thus, the first conduit 18 is continuous between the first connection 16 and the water heater 44 in Fig. 1 and Fig. 2 and between the first connection 16 and the mixer valve 42 in Fig. 3 and Fig. 4.

There are also no hidden connections present between the second connection 20 and the inlet of the mixer valve 42 in Fig. 1 and Fig. 4, between the second connection 20 and the water valve 40 in Fig. 2 and between the second connection 20 and the water heater 44 in Fig. 3 and Fig. 4. Thus, the second conduit 22 is continuous between the second connection 20 and the inlet of a mixer valve 42 in Fig. 1 and Fig. 4, between the second connection 20 and the water valve 40 in Fig. 2 and between the second connection 20 and the water heater 44 in Fig. 3 and Fig. 4

Since no such hidden connections are needed the risk of water leakage between the conduit 18, 22 and the coupling element 16, 20 is eliminated. Thus, damages due to water leakage in floor and wall elements can therefore be avoided.

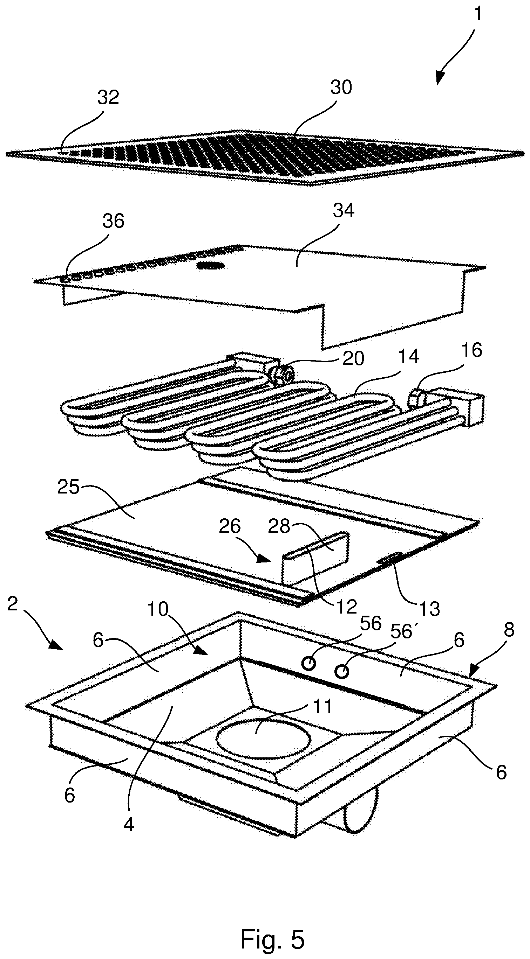

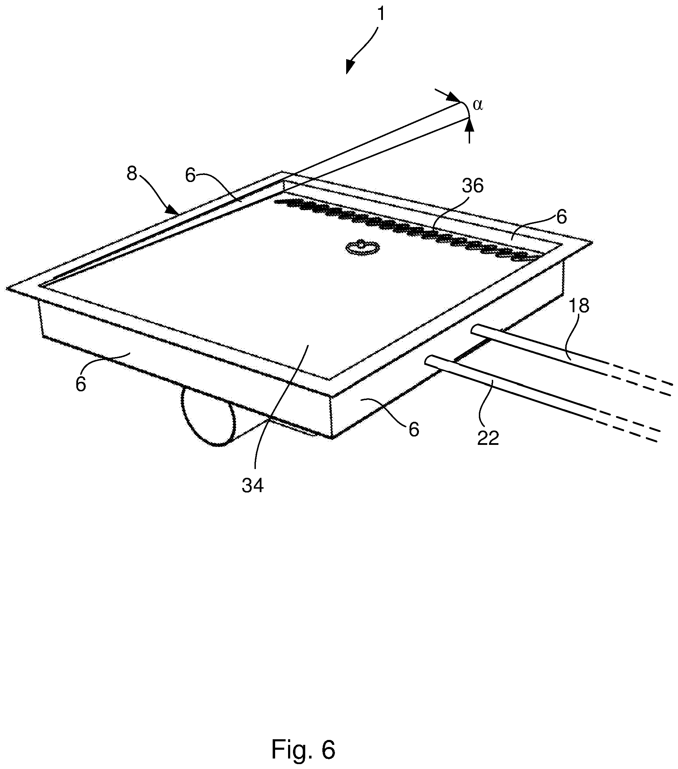

The floor drain 1 will further be described with reference to fig. 5-8. Fig. 5 shows a perspective view of the floor drain 1, wherein the floor drain 1 is exploded and fig. 6 shows a perspective view of the floor drain 1, wherein the floor drain 1 is assembled.

The floor drain 1 comprises the drain compartment 2 having a bottom 4, four sides 6 and an open upper portion 8. The sides 6 and the bottom 4 together define a space 10 to collect waste water. The floor drain 1 further comprises a heat exchanger element 14, receivable in the space 10 of the drain compartment 2, for transferring heat present in the waste water to the fresh water inside the heat exchanger element 14. The bottom 4 of the drain compartment 2 comprises an opening 11. The opening 11 assures that the waste water in the drain compartment 2 is emptied when the floor drain 1 is not used.

The heat exchanger element 14 is connected with a first connection 16 to the first conduit 18 for fresh water having a first temperature t1 and with the second connection 20 to a second conduit 22 for fresh water having a second temperature t2. One side 6 of the drain compartment 2 comprises two openings 56, 56' (shown in Fig. 5). The first conduit 18 is arranged through the opening 56 and the second conduit 22 is arranged through the opening 56'. It is also possible to arrange the first conduit 18 through the opening 56' and to arrange the second conduit 22 through the opening 56. The first conduit 18 and the second conduit 22 are thereby arranged both inside the drain compartment 2 and outside the drain compartment 2 (i.e. inside the floor 48). The dashed lines in Fig. 6-8 show the extension of the first conduit 18 and the second conduit 22.

Preferably, a sealing (not shown) is arranged between the first conduit 18 and the opening 56 and a further sealing (not shown) is arranged between the second conduit 22 and the opening 56' so that no water can exit from the drain compartment 2, through the openings 56, 56' and into the floor 48. It is also possible to connect the heat exchanger element 14 with the first connection 16 to a pipe-in-pipe (not shown) and with the second connection 20 to a further pipe-in-pipe (not shown). A pipe-in-pipe (also called PiP) is a pipe inserted inside a protective conduit pipe. If pipe-in-pipes are used, the outer protective conduit pipes function as sealings against the openings 56, 56'.

The fresh water entering the heat exchanger element 14 has the first temperature t1 and the fresh water exiting the heat exchanger element 14 has the second temperature t2. During showering (and if, as mentioned above, the fourth temperature t4 is higher than the first temperature t1) the fresh water inside the heat exchanger element 14 will absorb energy, from the waste water inside the drain compartment 2, when passing through the heat exchanger element 14 and as a result the second temperature t2 is raised. Thus, the second temperature t2 becomes higher than the first temperature t1.

The first connection 16 and the second connection 20 are arranged inside the space 10 of the drain compartment 2. The first connection 16 and the second connection 20 can comprise couplings or be welded connections. The couplings can for example be swivel couplings. A swivel coupling is a coupling between two parts enabling one to revolve without turning the other. If the first connection 16 and the second connection 20 are arranged as swivelling couplings, the heat exchanger element 14 is allowed to be pivoted between a first position p1 and a second position p2. Thereby the first connection 16 and the second connection 20 can be flexible connections. According to this embodiment, the conduits 18, 22 may be made of a stiff material, such as copper or steel. The heat exchanger element 14 is preferably made of a material with a high thermal conductivity and a high corrosion resistance, for example copper, to achieve high heat exchange efficiency between the waste water in the drain compartment 2 and the fresh water inside the heat exchanger element 14.

The drain compartment 2 further comprises a partition wall 25 removably arranged within the space 10 of the drain compartment 2 and under the heat exchanger element 14. The partition wall 25 comprises at least one waste water outlet 12, 13 and a drain control unit 26 having walls 28 encircling a waste water outlet 12. The walls 28 are protruding upward from the partition wall 25 and the walls 28 are also protruding above the heat exchanger element 14 when the heat exchanger element 14 is arranged in a first position p1. The first position p1 is described further below. Thereby the whole heat exchanger element 14 is completely submerged in the waste water filled in the drain compartment 2 and the energy present in the waste water is efficiently transferred to the fresh water inside the heat exchanger element 14. The waste water outlets 12, 13 and the opening 11 allow completely emptying of the drain compartment 2. Thereby the risk of reduced thermal efficiency of the heat exchanger element 14 is reduced. The ability to empty the drain compartment 2 also reduces the risk of mold formation in the waste water in the space 10 of the drain compartment 2 and thereby also the risk of obnoxious smells from the floor drain 1 is reduced.

The floor drain 1 further comprises a waste water guiding element 34 removably arranged within the space 10 of the drain compartment 2 and above the heat exchanger element 14. The waste water guiding element 34 is arranged to slope downwards towards the heat exchanger element 14 with an angle α in relation to the open upper portion 8 of the drain compartment 2. The angle α is preferably between about 0,01° and about 15°. The waste water guiding element 34 is provided with second openings 36 via which waste water is arranged to enter the space 10 of the drain compartment 2. The second openings 36 are arranged in a row in a lowermost part of the waste water guiding element 34. It is preferable that the size of the second openings 36 is not too large to prevent foreign substances from flowing into the drain compartment 2.

The second openings 36 for waste water in the waste water guiding element 34 is orientated in relation to the waste water outlets 12, 13 in the partition wall 25 such that flow of waste water in the space 10 of the drain compartment 2 is directed in a direction essentially opposite to the direction of the fresh water in the heat exchanger element 14. Thus, the heat exchanger element 14 is operated in counter flow. The best efficiency of a liquid-liquid heat exchanger is obtained if the two liquids, between which energy is transferred, flow in opposite directions.

The partition wall 25 and/or the water guiding element 34 may be corrugated in order to guide waste water in suitable directions in between different parts of the heat exchanger element 14.

The floor drain 1 further comprises a cover 30 removably arranged upon the open upper portion 8 of the drain compartment 2 and provided with first openings 32 via which waste water is arranged to enter the space 10 of the drain compartment 2. If the floor drain 1 does not comprise a waste water guiding element 34, the first openings 32 for waste water in the cover 30 are preferably orientated in relation to the waste water outlets 12, 13 in the partition wall 25 such that flow of waste water in the space 10 of the drain compartment 2 is directed in a direction essentially opposite to the direction of the fresh water in the heat exchanger element 14. In such way the heat exchanger element 14 is operated in counter flow. If the floor drain 1 comprises a waste water guiding element 34, the first openings 32 for waste water in the cover 30 are preferably arranged over the whole waste water guiding element 34. In such way waste water is easily drained from the floor in which the floor drain 1 is arranged. The floor drain 1 can comprise a drain trap (not shown) in connection to the waste water outlets 12, 13.

The drain trap can be arranged in the opening 11. If the floor drain 1 does not comprise a drain trap it is called a scupper.

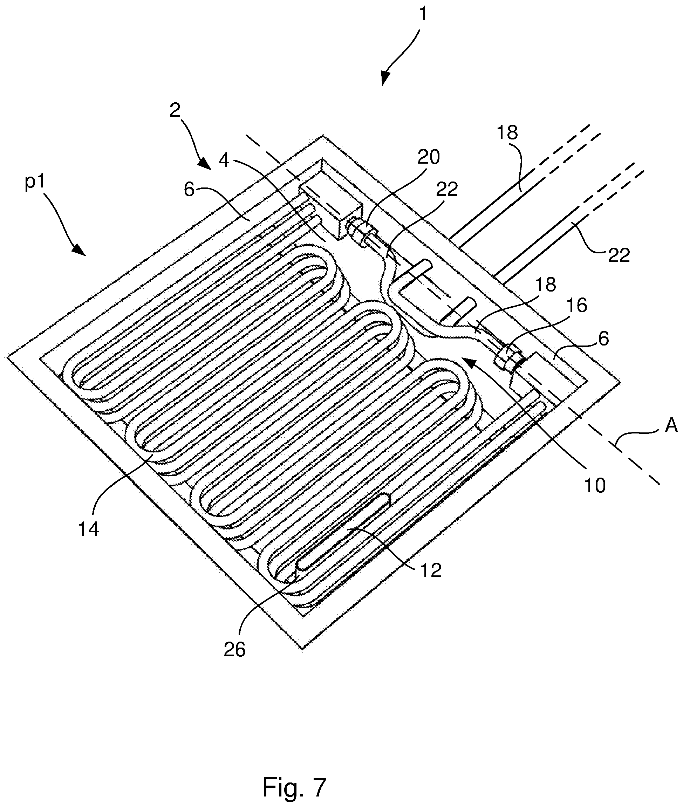

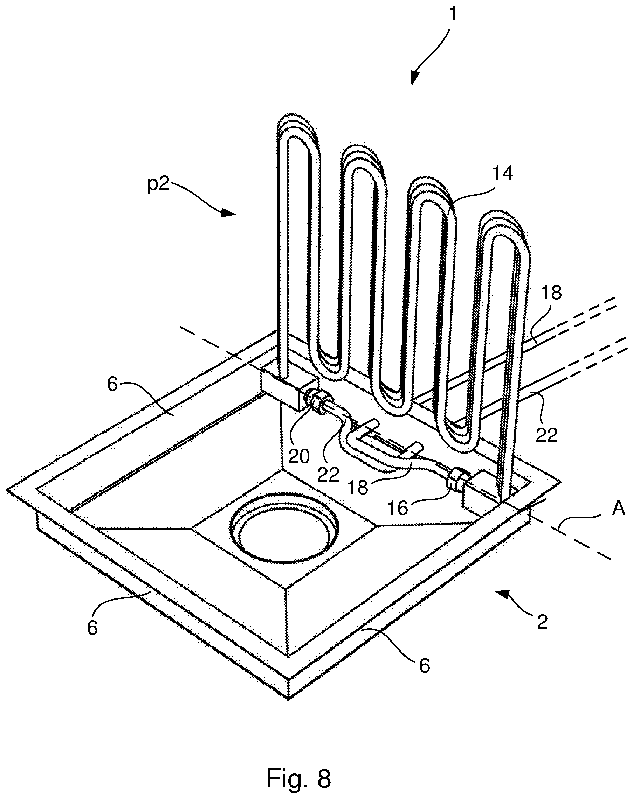

The heat exchanger element 14 is pivotably arranged between a first position p1 and a second position p2. The first position p1 is a position wherein the whole heat exchanger element 14 is received within the drain compartment 2, which is shown in fig. 7. The second position p2 is a position wherein the whole heat exchanger element 14 is not received within the drain compartment 2, which is shown in fig. 8. The heat exchanger element 14 can be pivotably arranged by using for example a first conduit 18 for fresh water having a first temperature t1 comprising a flexible material and a second conduit 22 for fresh water having a second temperature t2 comprising a flexible material. The flexible material will flex when the heat exchanger element 14 is pivoted between the positions p1 and p2. The heat exchanger element 14 is pivotable about an axis A, which axis A is substantially parallel with one straight side 6 of the drain compartment 2. It is possible for the floor drain 1 to have several straight sides 6 and it is also possible for the floor drain 1 to not have any straight sides 6, for example if the floor drain 1 has a round shape.

During use of the floor drain 1, for example during showering, the heat exchanger element 14 is arranged in the first position p1. During cleaning of the floor drain 1, the cover 30, the partition wall 25 and the waste water guiding element 34 are removed from the floor drain 1 and the heat exchanger element 14 is pivoted from the first position p1 to the second position p2. Then it is possible to easily clean the cover 30, the partition wall 25, the waste water guiding element 34 and the heat exchanger element 14. Thereby it is also possible to access a drain trap (not shown) if provided in the opening 11.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims.

## Claims

1. A floor drain (1), comprising a drain compartment (2) having a bottom (4), at least one side (6) and an open upper portion (8), wherein the bottom (4) and the at least one side (6) together define a space (10) to collect waste water and wherein the bottom (4) comprises an opening (11) for a drain trap, further comprising a heat exchanger element (14), receivable in the space (10) of the drain compartment (2), for transferring heat present in the waste water to fresh water, which heat exchanger element (14) is provided with a first connection (16) and a second connection (20), wherein the first connection (16) and the second connection (20) are arranged inside the space (10) of the drain compartment (2), and a first conduit (18) for fresh water is connected to the first connection (16) and in that a second conduit (22) for fresh water is connected to the second connection (20), wherein the first conduit (18) is arranged to comprise fresh water having a first temperature (t1) and in that the second conduit (22) is arranged to comprise fresh water having a second temperature (t2), the heat exchanger element (14) is pivotably arranged between a first position (p1) and a second position (p2), **characterized in that** the floor drain (1) further comprises a partition wall (25) removably arranged within the space (10) of the drain compartment (2) and comprising at least one waste water outlet (12, 13) and a drain control unit (26) having walls (28) encircling the at least one waste water outlet (12), wherein the walls (28) are protruding upward from the partition wall (25) and wherein the walls (28) are protruding above the heat exchanger element (14) when the heat exchanger element (14) is arranged in the first position (p1).

2. The floor drain according to any of the above claims, **characterized in that** the drain compartment (2) comprises at least one straight side (6).

3. The floor drain according to any of the above claims, **characterized in that** the heat exchanger element (14) is pivotable about an axis (A), which axis (A) is substantially parallel with the at least one straight side (6) of the drain compartment (2).

4. The floor drain according to any of the above claims, **characterized in that** the first conduit (18) for fresh water having a first temperature (t1) and the second conduit (22) for fresh water having a second temperature (t2) comprise a flexible material.

5. The floor drain according to any of the above claims, **characterized in that** the floor drain (1) further comprises a cover (30) removably arranged upon the open upper portion (8) of the drain compartment (2) and provided with at least one first opening (32) via which waste water is arranged to enter the space (10) of the drain compartment (2).

6. The floor drain according to claim 5, **characterized in that** the first opening (32) for waste water in the cover (30) is orientated in relation to the at least one waste water outlet (12, 13) in the partition wall (25) such that flow of waste water in the space (10) of the drain compartment (2) is directed in a direction essentially opposite to the direction of the fresh water in the heat exchanger element (14).

7. The floor drain according to any of claims 5 or 6, **characterized in that** the floor drain (1) further comprises a waste water guiding element (34) removably arranged within the space (10) of the drain compartment (2) and arranged to slope downwards towards the heat exchanger element (14), with an angle (α) in relation to the open upper portion (8) of the drain compartment (2), and provided with at least one second opening (36) via which waste water is arranged to enter the space (10) of the drain compartment (2), wherein the at least one second opening (36) is arranged in a lowermost part of the waste water guiding element (34).

8. The floor drain according to claim 7, **characterized in that** the at least one second opening (36) for waste water in the waste water guiding element (34) is orientated in relation to the at least one waste water outlet (12, 13) in the partition wall (25) such that flow of waste water in the space (10) of the drain compartment (2) is directed in a direction essentially opposite to the direction of the fresh water in the heat exchanger element (14).

9. The floor drain according to claim 7 or 8, **characterized in that** the angle (α) is preferably between about 0,01° and about 15°.

10. The floor drain according to any of claims 7-9, **characterized in that** a plurality of second openings (36) are arranged in a row.

11. The floor drain according to any of the above claims, **characterized in that** the floor drain (1) further comprises a drain trap arranged in connection to the at least one waste water outlet (12, 13).

12. The floor drain according to any of the above claims, **characterized in that** the fresh water inside the heat exchanger element (14) is tap water.

13. The floor drain according to any of the above claims, **characterized in that** the second conduit (22) for fresh water having a second temperature (t2) is connected to a water valve (40) or a mixer valve (42) and/or a water heater (44).

## Patentansprüche

1. Bodenablauf (1), umfassend ein Ablauffach (2) mit einem Boden (4), mindestens eine Seite (6) und einen offenen oberen Abschnitt (8), wobei der Boden (4) und die mindestens eine Seite (6) zusammen einen Raum (10) zum Sammeln von Abwasser definieren, und wobei der Boden (4) eine Öffnung (11) für einen Wasserverschluss umfasst, ferner umfassend ein Wärmetauscherelement (14), das in dem Raum (10) des Ablauffachs (2) aufgenommen werden kann, zum Übertragen von im Abwasser vorhandener Wärme auf Frischwasser, wobei das Wärmetauscherelement (14) mit einem ersten Anschluss (16) und einem zweiten Anschluss (20) bereitgestellt ist, wobei der erste Anschluss (16) und der zweite Anschluss (20) innerhalb des Raumes (10) des Ablauffachs (2) angeordnet sind, und eine erste Leitung (18) für Frischwasser mit dem ersten Anschluss (16) verbunden ist, und wobei eine zweite Leitung (22) für Frischwasser mit dem zweiten Anschluss (20) verbunden ist, wobei die erste Leitung (18) so angeordnet ist, dass sie Frischwasser mit einer ersten Temperatur (t1) umfasst, und wobei die zweite Leitung (22) so angeordnet ist, dass sie Frischwasser mit einer zweiten Temperatur (t2) umfasst, wobei das Wärmetauscherelement (14) zwischen einer ersten Position (p1) und einer zweiten Position (p2) schwenkbar angeordnet ist, **dadurch gekennzeichnet, dass** der Bodenablauf (1) ferner eine Trennwand (25) umfasst, die abnehmbar im Raum (10) des Ablauffachs (2) angeordnet ist und mindestens einen Abwasserauslass (12, 13) umfasst und eine Ablaufsteuereinheit (26) mit Wänden (28), die den mindestens einen Abwasserauslass (12) umschließen, wobei die Wände (28) von der Trennwand (25) nach oben ragen, und wobei die Wände (28) über das Wärmetauscherelement (14) ragen, wenn das Wärmetauscherelement (14) in der ersten Position (p1) angeordnet ist.

2. Bodenablauf nach einem der vorstehenden Ansprüche, **dadurch gekennzeichnet, dass** das Ablauffach (2) mindestens eine gerade Seite (6) umfasst.

3. Bodenablauf nach einem der vorstehenden Ansprüche, **dadurch gekennzeichnet, dass** das Wärmetauscherelement (14) um eine Achse (A) schwenkbar ist, wobei die Achse (A) im Wesentlichen parallel zu der mindestens einen geraden Seite (6) des Ablauffachs (2) verläuft.

4. Bodenablauf nach einem der vorstehenden Ansprüche, **dadurch gekennzeichnet, dass** die erste Leitung (18) für Frischwasser mit einer ersten Temperatur (t1) und die zweite Leitung (22) für Frischwasser mit einer zweiten Temperatur (t2) ein flexibles Material umfassen.

5. Bodenablauf nach einem der vorstehenden Ansprüche, **dadurch gekennzeichnet, dass** der Bodenablauf (1) ferner eine Abdeckung (30) umfasst, die abnehmbar am offenen oberen Abschnitt (8) des Ablauffachs (2) angeordnet ist und mit mindestens einer ersten Öffnung (32) bereitgestellt ist, über die Abwasser in den Raum (10) des Ablauffachs (2) gelangen kann.

6. Bodenablauf nach Anspruch 5, **dadurch gekennzeichnet, dass** die erste Öffnung (32) für Abwasser in der Abdeckung (30) in Bezug auf den mindestens einen Abwasserauslass (12, 13) in der Trennwand (25) so ausgerichtet ist, dass der Abwasserstrom im Raum (10) des Ablauffachs (2) in eine Richtung im Wesentlichen entgegen der Richtung des Frischwassers im Wärmetauscherelement (14) gerichtet ist.

7. Bodenablauf nach einem der Ansprüche 5 oder 6, **dadurch gekennzeichnet, dass** der Bodenablauf (1) ferner ein Abwasserführungselement (34) umfasst, das abnehmbar im Raum (10) des Ablauffachs (2) angeordnet und so angeordnet ist, dass es nach unten zum Wärmetauscherelement (14) geneigt ist, mit einem Winkel (α) in Bezug auf den offenen oberen Abschnitt (8) des Ablauffachs (2), und mit mindestens einer zweiten Öffnung (36) bereitgestellt, über die das Abwasser in den Raum (10) des Ablauffachs (2) eintritt, wobei die mindestens eine zweite Öffnung (36) in einem untersten Teil des Abwasserführungselements (34) angeordnet ist.

8. Bodenablauf nach Anspruch 7, **dadurch gekennzeichnet, dass** die mindestens eine zweite Öffnung (36) für Abwasser im Abwasserführungselement (34) in Bezug auf den mindestens einen Abwasserauslass (12, 13) in der Trennwand (25) so ausgerichtet ist, dass der Abwasserstrom im Raum (10) des Ablauffachs (2) in eine Richtung im Wesentlichen entgegen der Richtung des Frischwassers im Wärmetauscherelement (14) gerichtet ist.

9. Bodenablauf nach Anspruch 7 oder 8, **dadurch gekennzeichnet, dass** der Winkel (α) vorzugsweise zwischen etwa 0,01° und etwa 15° liegt.

10. Bodenablauf nach einem der Ansprüche 7 bis 9, **dadurch gekennzeichnet, dass** eine Vielzahl von zweiten Öffnungen (36) in einer Reihe angeordnet ist.

11. Bodenablauf nach einem der vorstehenden Ansprüche, **dadurch gekennzeichnet, dass** der Bodenablauf (1) ferner einen Wasserverschluss umfasst, der in Verbindung mit dem mindestens einen Abwasserauslass (12, 13) angeordnet ist.

12. Bodenablauf nach einem der vorstehenden Ansprüche, **dadurch gekennzeichnet, dass** das Frischwasser im Inneren des Wärmetauscherelements (14) Leitungswasser ist.

13. Bodenablauf nach einem der vorstehenden Ansprüche, **dadurch gekennzeichnet, dass** die zweite Leitung (22) für Frischwasser mit einer zweiten Temperatur (t2) mit einem Wasserventil (40) oder einem Mischventil (42) und/oder einem Warmwasserbereiter (44) verbunden ist.

## Revendications

1. Siphon de sol (1), comprenant un compartiment de siphon (2) ayant un fond (4), au moins un côté (6) et une partie supérieure ouverte (8), dans lequel le fond (4) et l'au moins un côté (6) définissent ensemble un espace (10) pour collecter des eaux usées et dans lequel le fond (4) comprend une ouverture (11) pour un siphon, comprenant en outre un élément d'échangeur de chaleur (14), pouvant être reçu dans l'espace (10) du compartiment de siphon (2), pour transférer la chaleur présente dans les eaux usées à de l'eau douce, lequel élément d'échangeur de chaleur (14) est pourvu d'un premier raccordement (16) et d'un deuxième raccordement (20), dans lequel le premier raccordement (16) et le deuxième raccordement (20) sont agencés à l'intérieur de l'espace (10) du compartiment de siphon (2), et un premier conduit (18) pour l'eau douce est raccordé au premier raccordement (16) et en ce qu'un deuxième conduit (22) pour l'eau douce est raccordé au deuxième raccordement (20), le premier conduit (18) est agencé pour comprendre de l'eau douce ayant une première température (t1) et en ce que le deuxième conduit (22) est agencé pour comprendre de l'eau douce ayant une deuxième température (t2), l'élément d'échangeur de chaleur (14) est agencé de manière pivotante entre une première position (p1) et une deuxième position (p2), **caractérisé en ce que** le siphon de sol (1) comprend en outre une paroi de séparation (25) agencée de façon amovible à l'intérieur de l'espace (10) du compartiment de siphon (2) et comprenant au moins une sortie d'eaux usées (12, 13) et une unité de commande de siphon (26) ayant des parois (28) encerclant l'au moins une sortie d'eaux usées (12), dans lequel les parois (28) font saillie vers le haut à partir de la paroi de séparation (25) et dans lequel les parois (28) font saillie au-dessus de l'élément d'échangeur de chaleur (14) lorsque l'élément d'échangeur de chaleur (14) est agencé dans la première position (p1).

2. Siphon de sol selon l'une quelconque des revendications précédentes, **caractérisé en ce que** le compartiment de siphon (2) comprend au moins un côté droit (6).

3. Siphon de sol selon l'une quelconque des revendications précédentes, **caractérisé en ce que** l'élément d'échangeur de chaleur (14) peut pivoter autour d'un axe (A), lequel axe (A) est sensiblement parallèle à l'au moins un côté droit (6) du compartiment de siphon (2).

4. Siphon de sol selon l'une quelconque des revendications précédentes, **caractérisé en ce que** le premier conduit (18) pour l'eau douce ayant une première température (t1) et le deuxième conduit (22) pour l'eau douce ayant une deuxième température (t2) comprennent un matériau flexible.

5. Siphon de sol selon l'une quelconque des revendications précédentes, **caractérisé en ce que** le siphon de sol (1) comprend en outre un couvercle (30) agencé de manière amovible sur la partie supérieure ouverte (8) du compartiment de siphon (2) et pourvu d'au moins une première ouverture (32) par laquelle des eaux usées peuvent entrer dans l'espace (10) du compartiment de siphon (2).

6. Siphon de sol selon la revendication 5, **caractérisé en ce que** la première ouverture (32) pour les eaux usées dans le couvercle (30) est orientée par rapport à l'au moins une sortie d'eaux usées (12, 13) dans la paroi de séparation (25) de telle sorte que l'écoulement des eaux usées dans l'espace (10) du compartiment de siphon (2) soit dirigé dans une direction essentiellement opposée à la direction de l'eau douce dans l'élément d'échangeur de chaleur (14).

7. Siphon de sol selon l'une quelconque des revendications 5 ou 6, **caractérisé en ce que** le siphon de sol (1) comprend en outre un élément de guidage des eaux usées (34) agencé de manière amovible à l'intérieur de l'espace (10) du compartiment de siphon (2) et agencé en pente vers le bas vers l'élément d'échangeur de chaleur (14), avec un angle (α) par rapport à la partie supérieure ouverte (8) du compartiment de siphon (2), et pourvu d'au moins une deuxième ouverture (36) par laquelle les eaux usées peuvent entrer dans l'espace (10) du compartiment de siphon (2), dans lequel l'au moins une deuxième ouverture (36) est agencée dans une partie la plus inférieure de l'élément de guidage des eaux usées (34).

8. Siphon de sol selon la revendication 7, **caractérisé en ce que** l'au moins une deuxième ouverture (36) pour les eaux usées dans l'élément de guidage des eaux usées (34) est orientée par rapport à l'au moins une sortie d'eaux usées (12, 13) dans la paroi de séparation (25) de telle sorte que l'écoulement des eaux usées dans l'espace (10) du compartiment de siphon (2) soit dirigé dans une direction essentiellement opposée à la direction de l'eau douce dans l'élément d'échangeur de chaleur (14).

9. Siphon de sol selon la revendication 7 ou 8, **caractérisé en ce que** l'angle (α) est de préférence compris entre environ 0,01° et environ 15°.

10. Siphon de sol selon l'une quelconque des revendications 7 à 9, **caractérisé en ce qu'**une pluralité de deuxièmes ouvertures (36) sont agencées en une rangée.

11. Siphon de sol selon l'une quelconque des revendications précédentes, **caractérisé en ce que** le siphon de sol (1) comprend en outre un siphon agencé en raccordement avec l'au moins une sortie d'eaux usées (12, 13).

12. Siphon de sol selon l'une quelconque des revendications précédentes, **caractérisé en ce que** l'eau douce à l'intérieur de l'élément d'échangeur de chaleur (14) est de l'eau du robinet.

13. Siphon de sol selon l'une quelconque des revendications précédentes, **caractérisé en ce que** le deuxième conduit (22) pour l'eau douce ayant une deuxième température (t2) est raccordé à une vanne d'eau (40) ou une vanne mélangeuse (42) et/ou un chauffe-eau (44).
